# FASCICULE DE BREVET EUROPEEN

(11) **EP 1 404 184 B1**
(45) Date de publication et mention de la délivrance du brevet: **09.07.2008**
(21) Numéro de dépôt: 02714298.3
(22) Date de dépôt: 14.03.2002
(51) Int. Cl.: A22C 29/00

(54) **PROCEDE DE PREPARATION DE CRUSTACES AINSI QUE DISPOSITIF PERMETTANT LA MISE EN OEUVRE DE CE PROCEDE**
VERFAHREN UND VORRICHTUNG ZUR BEHANDLUNG VON KRUSTENTIEREN
METHOD FOR PREPARING SHELLFISH AND DEVICE FOR CARRYING OUT SAID METHOD

(30) Priorité: 15.03.2001 FR 0103511
(43) Date de publication de la demande: 07.04.2004
(73) Titulaire: Leroux, Jean-Claude, 13480 Calas (FR)
(72) Inventeur: Leroux, Jean-Claude, 13480 Calas (FR)
(74) Mandataire: Livet, Marie-José
(86) Numéro de dépôt international: PCT/FR2002/000904
(87) Numéro de publication internationale: WO 2002/074095

(56) Documents cités:
- WO-A-01/06870
- FR-A- 1 380 964
- FR-A- 2 166 660
- US-A- 2 525 604
- US-A- 3 257 683

## Description

La présente invention concerne un procédé de préparation de crustacés, en particulier de homards ou de langoustes. Un tel procédé est connu du document FR 2166660.

De manière traditionnelle, les homards ou les langoustes sont congelés ou surgelés sur leur lieu de pêche puis transportés vers de grandes chambres froides dans lesquelles ils sont stockés à des températures de l'ordre de -18 à -25°C en veillant qu'il n'y ait pas d'interruption de la chaîne du froid au cours de ce transport.

Préalablement à leur mise en vente, en particulier en grande surface, ces crustacés sont extraits des chambres froides et transférés dans des ateliers de travail dans lesquels ils sont coupés en deux dans le sens de la longueur, décongelés et éviscérés avant d'être soumis à diverses préparations (ajout de mayonnaise, de macédoine, de rondelles de citron...) et conditionnés par exemple sous barquettes plastiques.

Les demi-crustacés ainsi éviscérés et préparés sont ensuite conservés à des températures positives de l'ordre de +2 à +4°C et doivent obligatoirement être vendus et consommés dans les cinq jours.

Les autorités interdisent en effet toute recongélation d'un crustacé qui a été décongelé pour en effectuer l'éviscération compte tenu des risques de contamination qui seraient ainsi encourus.

Cette situation n'est pas sans créer de nombreux problèmes au niveau de la gestion des stocks.

La présente invention a pour objet de proposer un procédé de préparation de crustacés, en particulier de homards ou de langoustes permettant de remédier à cet inconvénient.

Ce procédé est caractérisé par la succession des étapes suivantes :
- on soumet les crustacés à une congélation ou à une surgélation à une température de l'ordre de -25°C,
- on les coupe en deux dans le sens de la longueur,
- on extrait les viscères à l'état solide par perforation de façon à les séparer de la partie consommable, en veillant à ce que la température des crustacés ne s'élève pas au-dessus de -18°C,
- on éjecte les viscères séparés de la partie consommable vers l'extérieur, et
- on stocke les crustacés éviscérés en chambre froide à une température de l'ordre de -18 à -25°C.

Ce procédé se distingue donc du procédé traditionnel de préparation des crustacés en ce que l'éviscération s'effectue à l'état solide congelé ou surgelé : ceci permet de stocker les crustacés éviscérés en chambre froide en dessous de -18°C notamment conditionné en barquettes sous gaz inerte et de ne les en sortir que lors de leur mise en vente, en fonction de la demande.

Il est essentiel conformément à l'invention que la température des crustacés traités ne dépasse pas -18°C : en effet, au-delà d'une telle température, un crustacé est considéré comme décongelé et ne peut donc plus être recongelé en vue de son stockage en chambre froide.

Il a pu être vérifié qu'il est possible de satisfaire à ces impératifs en effectuant l'éviscération dans des ateliers de travail dans lesquels la température est maintenue entre 0 et +4°C.

Selon une caractéristique particulièrement avantageuse de l'invention on extrait les viscères découpés et séparés de la partie consommable au moyen d'organes d'aspiration reliés à une source de vide.

Ces organes aspirent en règle générale les viscères découpés sous l'action d'une dépression de l'ordre de 0,1 à 150 bars ; la valeur de cette dépression est fonction de la densité des particules à extraire.

Selon une caractéristique préférentielle de l'invention, on découpe les viscères au moyen d'une fraise tournant à une vitesse de l'ordre de 100 à 10 000 tours par minute. Cette vitesse doit être adaptée suivant la nature des crustacés et leur mode de conservation pour obtenir le meilleur rendement des opérations de pénétration de découpe et d'extraction.

Les organes d'entraînement de la fraise sont de préférence couplés aux organes d'aspiration de sorte que son démarrage soit simultané à la mise en route de ces organes.

Il s'agit là d'une caractéristique avantageuse de l'invention vu qu'elle permet de récupérer les viscères découpés et séparés de la partie consommable en évitant la projection de ceux-ci sur l'opérateur et son environnement.

Il est à noter que, pour garantir la mise en oeuvre du procédé dans des conditions d'hygiène satisfaisantes et exclure tout risque de contamination, il est nécessaire de désinfecter régulièrement les différents éléments permettant la mise en oeuvre de ce procédé, en particulier la fraise ainsi que les organes d'aspiration.

Ces éléments peuvent avantageusement être désinfectés à l'aide d'une solution utilisée à température ambiante puis rincés à l'eau stérile et séchés par soufflage d'air.

La présente invention concerne également un dispositif permettant la mise en oeuvre du procédé susmentionné.

Ce dispositif est caractérisé en ce qu'il comporte une fraise constituée par un embout métallique fixé à l'extrémité d'un axe rotatif et comportant une ou plusieurs arêtes latérales coupantes.

La vitesse de rotation de la fraise permet sa pénétration dans les viscères congelés et l'extraction de ces viscères compte tenu de sa géométrie.

La fraise peut être de dimension et de forme quelconque sans pour cela sortir du cadre de l'invention.

L'expérience a néanmoins démontré que l'on pouvait avantageusement mettre en oeuvre une fraise constituée par un embout conique dont les arêtes coupantes s'étendent le long d'une ou de plusieurs de ses génératrices.

Une telle fraise peut le cas échéant être équipée d'un téton perforant à son extrémité.

Un tel téton a pour fonction d'extraire les viscères dans les extrémités des cavités de l'abdomen du crustacé.

Selon une autre caractéristique de l'invention, le dispositif comporte un tube recevant la fraise ainsi que l'axe rotatif et coopérant d'une part avec des organes d'entraînement électrique ou pneumatique de la fraise à l'une de ses extrémités ou première extrémités et d'autre part avec les demi-crustacés à éviscérer à son extrémité opposée ou seconde extrémité.

Ce tube est de préférence constitué par un tube rigide ou semi-rigide se prolongeant au niveau de sa seconde extrémité par une partie tubulaire souple rétractable.

Il comporte par ailleurs de préférence une tubulure latérale montée en dérivation sur celui-ci et reliée à une source de vide de façon à constituer des organes d'aspiration.

Ce tube qui est en règle générale réalisé en une matière plastique alimentaire permet de « canaliser » et d'aspirer vers la source de vide les particules découpées au fur et à mesure de leur extraction de façon à protéger efficacement à la fois l'opérateur et l'environnement.

Il est à noter que conformément à l'invention les demi-crustacés à éviscérer peuvent être soit maintenus manuellement par l'opérateur et poussés verticalement vers le haut pour venir en prise avec l'embout rotatif soit mis en place sur des organes de support réglables dont l'inclinaison peut varier en fonction du travail à effectuer.

Dans ce dernier cas, la fraise peut descendre vers le coffre du crustacé renfermant les viscères ou les organes support peuvent remonter vers la fraise.

Ce mouvement peut être commandé manuellement ou par le pied à partir d'un dispositif d'actionnement.

On a pu constater qu'un tel dispositif peut se colmater à intervalle plus ou moins long compte tenu de l'accumulation dans les tubes de particules glacées qui s'agglomèrent.

Selon une autre caractéristique de l'invention permettant de remédier à ces inconvénients, le dispositif comporte des organes permettant d'éviter l'obturation du tube et de la tubulure latérale.

De tels organes peuvent être à titre d'exemple constitués par des organes de chauffage du tube d'extraction, notamment par injection d'eau dans le tube, par injection d'air chaud dans une double enveloppe entourant celui-ci, ou encore par des systèmes chauffants électriques (résistances, rubans chauffants, ...).

On a pu vérifier conformément à l'invention que les crustacés ayant été éviscérés à l'état congelé bénéficient lors de la décongélation d'une qualité bactériologique nettement supérieure à celle des crustacés décongelés avant éviscération.

Les caractéristiques du procédé ainsi que du dispositif qui font l'objet de l'invention seront décrites plus en détail en se référant aux dessins non restrictifs annexés dans lesquels :
- la figure 1 est une vue schématique du dispositif,
- la figure 2 est une vue de dessus de la fraise,
- la figure 3 est une vue de dessous de la fraise.

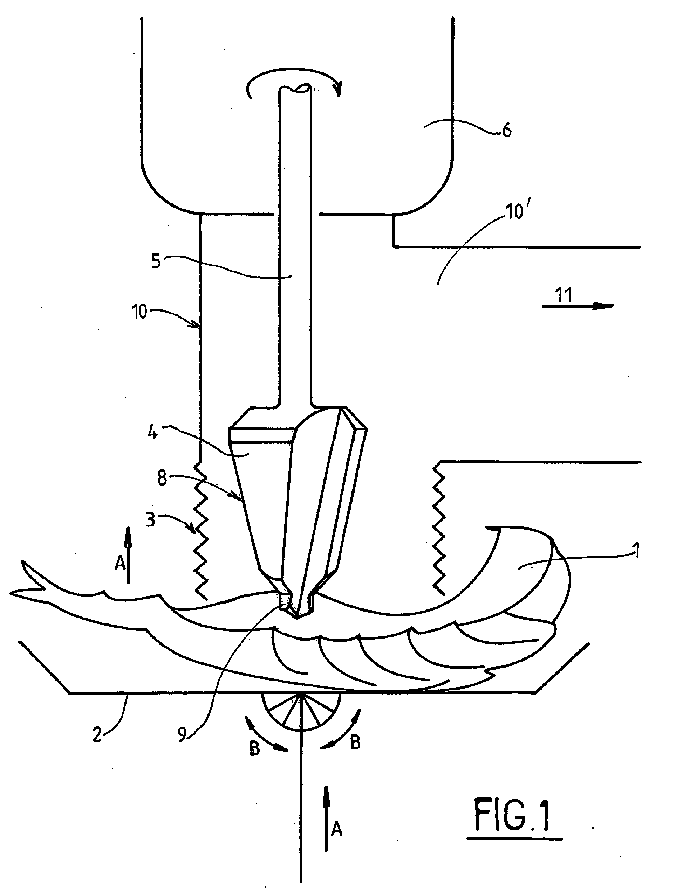

Selon l'exemple de configuration représenté sur la figure 1, le demi-crustacé à éviscérer 1 est placé sur un support 2 mobile en translation verticale selon les flèches A et pouvant en outre être incliné par rapport à l'horizontale comme représenté par les flèches B.

Ce demi-crustacé 1 est placé au droit de l'extrémité inférieure d'un ensemble tubulaire 3, 10 constitué par un tube rigide 10 se prolongeant par une partie tubulaire souple rétractable 3.

Cet ensemble tubulaire 3, 10 reçoit une fraise 4 fixée à l'extrémité d'un axe rotatif 5 commandé par des organes d'entraînement électrique ou pneumatique 6 montés à l'extrémité supérieure du tube 10.

Selon la figure 1, le tube 10 comporte en outre une tubulure latérale 10' montée en dérivation sur celui-ci et reliée à une source de vide schématisée par la flèche 11 de façon à constituer des organes d'aspiration.

Cette tubulure latérale 10' permet en effet d'extraire par aspiration les particules découpées au fur et à mesure de leur découpe. Elle est en outre éventuellement couplée aux organes d'entraînement de la fraise 4 de façon à être mise en route dès le démarrage de ces organes d'entraînement.

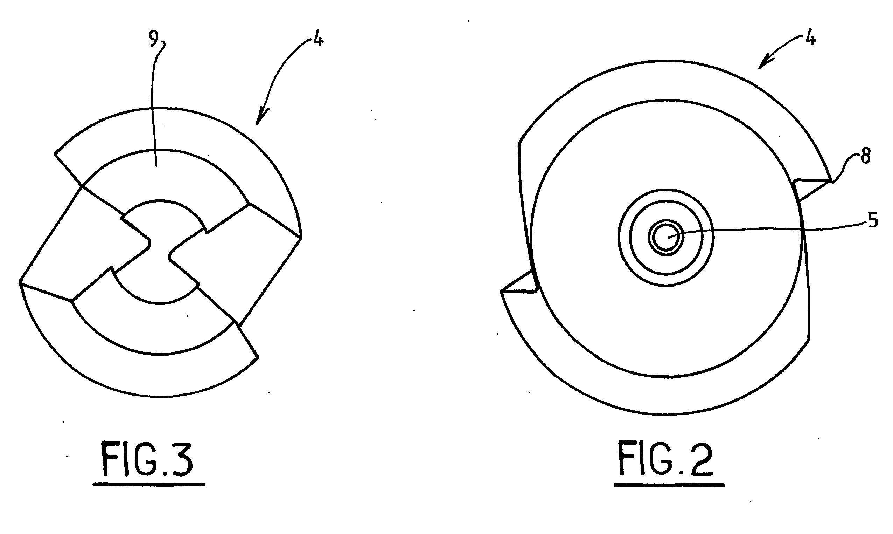

Selon les figures 1, 2 et 3, la fraise 4 est constituée par un embout de forme conique comportant deux arêtes latérales coupantes 8 s'étendant le long de deux génératrices diamétralement opposées et ayant pour fonction de découper les viscères du crustacé à l'état solide par perforation de façon à permettre leur extraction.

Un téton perforant 9 situé à l'extrémité inférieure de l'embout 4 permet d'extraire les viscères dans les extrémités des cavités de l'abdomen du crustacé.

## Revendications

1. Procédé de préparation de crustacés en particulier de homards ou de langoustes,
**caractérisé par** la succession des étapes suivantes :
- on soumet les crustacés à une congélation ou à une surgélation à une température de l'ordre de -25°C,
- on les coupe en deux dans le sens de la longueur,
- on extrait les viscères à l'état solide par perforation de façon à les séparer de la partie consommable, en veillant à ce que la température des crustacés ne s'élève pas au-dessus de -18°C,
- on éjecte les viscères séparés de la partie consommable vers l'extérieur, et
- on stocke les crustacés éviscérés en chambre froide à une température de l'ordre de -18 à -25°C.

2. Procédé selon la revendication 1,
**caractérisé en ce que**
l'on extrait les viscères découpés et séparés de la partie consommable au moyen d'organes d'aspiration reliés à une source de vide.

3. Procédé selon la revendication 2,
**caractérisé en ce que**
les organes d'aspiration aspirent les viscères découpés sous l'action d'une dépression de l'ordre de 0,1 à 150 bars.

4. Procédé selon l'une quelconque des revendications 1 à 3,
**caractérisé en ce que**
l'on découpe les viscères au moyen d'une fraise tournant à une vitesse de l'ordre de 100 à 10 000 tours par minute.

5. Procédé selon les revendications 2 et 4,
**caractérisé en ce que**
les organes d'aspiration sont couplés à la fraise.

6. Procédé selon l'une quelconque des revendications 1 à 5,
**caractérisé en ce que**
l'on désinfecte régulièrement la fraise ainsi que les organes d'aspiration.

7. Procédé selon l'une quelconque des revendications 1 à 6,
**caractérisé en ce qu'**
on utilise une fraise (4) constituée par un embout métallique de préférence conique fixé à l'extrémité d'un axe rotatif (5) et comportant une ou plusieurs arêtes latérales coupantes (8) s'étendant le long d'une ou de plusieurs de ses génératrices.

8. Procédé selon la revendication 7,
**caractérisé en ce que**
la fraise (4) est équipée d'un téton perforant (9) à son extrémité.

9. Procédé selon l'une quelconque des revendications 7 et 8,
**caractérisé en ce qu'**
on utilise un tube (3, 10) recevant la fraise (4) ainsi que l'axe rotatif (5) et coopérant d'une part avec des organes d'entraînement électrique ou pneumatique (6) de la fraise (4) à l'une de ses extrémités ou première extrémité et d'autre part avec les demi-crustacés à éviscérer (1) à son extrémité opposée ou seconde extrémité.

10. Procédé selon la revendication 9,
**caractérisé en ce que**
le tube (3, 10) est constitué par un tube (10) rigide ou semi-rigide se prolongeant au niveau de sa seconde extrémité par une partie tubulaire souple rétractable (3).

11. Procédé selon l'une quelconque des revendications 9 et 10,
**caractérisé en ce que** le tube (3, 10) comporte une tubulure latérale (10') montée en dérivation sur celui-ci et relié à une source de vide (11).

12. Procédé selon l'une quelconque des revendications 1 à 11,
**caractérisé en ce qu'**
on utilise des organes de support (2) des demi-crustacés (1) à éviscérer.

13. Procédé selon l'une quelconque des revendications 7 à 12,
**caractérisé en ce qu'**
on utilise des organes permettant d'éviter l'obturation du tube (3, 10) et de la tubulure latérale (10').

## Claims

1. Method of preparing shellfish, in particular lobsters or crayfish,
**characterised by** the following series of steps:
- the shellfish are subjected to a freezing or deep-freezing process at a temperature in the order of -25°,
- they are cut in half in the lengthways direction,
- the viscera are removed in the solid state by perforation in order to separate them from the consumable part, taking care to ensure that the temperature of the shellfish does not rise above -18°,
- the viscera separated from the consumable part are ejected to the exterior and
- the eviscerated shellfish are stored in a coldroom at a temperature in the order of -18 to -25°.

2. Method as claimed in claim 1,
**characterised in that**
the viscera cut and separated from the consumable part are extracted by means of suction elements connected to a vacuum source.

3. Method as claimed in claim 2,
**characterised in that**
the suction elements suck the severed viscera under the action of a negative pressure in the order of 0.1 to 150 bar.

4. Method as claimed in any one of claims 1 to 3,
**characterised in that**
the viscera are severed by means of a cutter rotating at a speed in the order of 100 to 10, 000 revolutions per minute.

5. Method as claimed in one of claims 2 and 4,
**characterised in that**
the suction elements are coupled with the cutter.

6. Method as claimed in any one of claims 1 to 5,
**characterised in that**
the cutter as well as the suction elements are regularly disinfected.

7. Method as claimed in any one of claims 1 to 6,
**characterised in that**
the cutter (4) used is one comprising a preferably conical metal end-piece attached to the end of a rotary shaft (5) and having one or more lateral cutting edges (8) extending along one or more of its generatrices.

8. Method as claimed in claim 7,
**characterised in that**
the cutter (4) is equipped with a perforating pin (9) at its end.

9. Method as claimed in any one of claims 7 and 8,
**characterised in that**
a tube (3, 10) is used, which accommodates the cutter (4) as well as the rotary shaft (5) and co-operates with the electric or pneumatic driving elements (6) of the cutter (4) at one of its ends or the first end on the one hand and with the half-shellfish (1) to be eviscerated at its opposite end or second end on the other hand.

10. Method as claimed in claim 9,
**characterised in that**
the tube (3, 10) is a rigid or semi-rigid tube (10) extended on a level with its second end by a retractable flexible tubular part (3).

11. Method as claimed in any one of claims 9 and 10,
**characterised in that**
the tube (3, 10) has a lateral hose (10>) fitted to it in a bypass arrangement and connected to a vacuum source (11).

12. Method as claimed in any one of claims 1 to 11,
**characterised in that**
elements (2) are used to support the half-shellfish (1) to be eviscerated.

13. Method as claimed in any one of claims 7 to 12,
**characterised in that**
elements are used which enable the tube (3, 10) and the lateral hose (10') to be shut off.

## Patentansprüche

1. Verfahren zur Vorbereitung von Krustentieren, insbesondere von Hummern oder Langusten,
**gekennzeichnet durch** die Aufeinanderfolge der folgenden Schritte:
- die Krustentiere werden bis zu einer Temperatur in der Größenordnung von -25°C eingefroren oder tiefgefroren,
- sie werden in Längsrichtung aufgeschnitten,
- die Eingeweide werden im festen Zustand **durch** Perforieren herausgelöst, um sie vom essbaren Teil zu trennen, wobei darauf geachtet wird, dass die Temperatur der Krustentiere nicht über -18°C ansteigt,
- die vom essbaren Teil abgetrennten Eingeweide werden nach außen ausgeworfen und
- die ausgenommenen Krustentiere werden in einem Kühlraum bei einer Temperatur in der Größenordnung von -18°C bis -25°C gelagert.

2. Verfahren nach Anspruch 1,
**dadurch gekennzeichnet,**
**dass** die vom essbaren Teil ausgeschnittenen und abgetrennten Eingeweide mit Hilfe von Absaugvorrichtungen, die mit einer Unterdruckquelle verbunden sind, entfernt werden.

3. Verfahren nach Anspruch 2,
**dadurch gekennzeichnet,**
**dass** die Absaugvorrichtungen die ausgeschnittenen Eingeweide unter der Wirkung eines Unterdrucks in der Größenordnung von 0,1 bis 150 bar absaugen.

4. Verfahren nach einem der Ansprüche 1 bis 3,
**dadurch gekennzeichnet,**
**dass** die Eingeweide mit Hilfe eines Fräsers ausgeschnitten werden, der sich mit einer Geschwindigkeit in der Größenordnung von 100 bis 10.000 Umdrehungen pro Minute dreht.

5. Verfahren nach den Ansprüchen 2 und 4,
**dadurch gekennzeichnet,**
**dass** die Ansaugvorrichtungen mit dem Fräser gekoppelt sind.

6. Verfahren nach einem der Ansprüche 1 bis 5,
**dadurch gekennzeichnet,**
**dass** der Fräser wie auch die Absaugvorrichtungen regelmäßig desinfiziert werden.

7. Verfahren nach einem der Ansprüche 1 bis 6,
**dadurch gekennzeichnet,**
**dass** ein Fräser (4) benutzt wird, der von einem metallenen, vorzugsweise konischen, am Ende einer Drehachse (5) befestigten Endstück gebildet ist und eine oder mehrere seitliche Schneidkanten (8) aufweist, die sich längs einer oder mehrerer seiner Mantellinien erstrecken.

8. Verfahren nach Anspruch 7,
**dadurch gekennzeichnet,**
**dass** der Fräser (4) an seinem Ende mit einem Perforierungszapfen (9) versehen ist.

9. Verfahren nach einem der Ansprüche 7 und 8,
**dadurch gekennzeichnet,**
**dass** ein Rohr (3, 10) benutzt wird, das den Fräser (4) wie auch die Drehachse (5) aufnimmt und einerseits mit den elektrischen oder pneumatischen Antriebsmitteln (6) des Fräsers (4) an einem seiner Enden oder ersten Ende und andererseits mit den auszunehmenden Krustentierhälften (1) an seinem gegen-überliegenden Ende oder zweiten Ende zusammenarbeitet.

10. Verfahren nach Anspruch 9,
**dadurch gekennzeichnet,**
**dass** das Rohr (3, 10) von einem starren oder halbstarren Rohr (10) gebildet ist, das im Bereich seines zweiten Endes durch einen rohrförmigen, elastisch zusammenschiebbaren Teil (3) verlängert ist.

11. Verfahren nach einem der Ansprüche 9 und 10,
**dadurch gekennzeichnet,**
**dass** das Rohr (3, 10) einen seitlichen Anschlussstutzen (10') aufweist, der auf diesem als Abzweigung angebracht und mit einer Unterdruckquelle (11) verbunden ist.

12. Verfahren nach einem der Ansprüche 1 bis 11,
**dadurch gekennzeichnet,**
**dass** Tragevorrichtungen (2) für die auszunehmenden Krustentierhälften (1) benutzt werden.

13. Verfahren nach einem der Ansprüche 7 bis 12,
**dadurch gekennzeichnet,**
**dass** Vorrichtungen benutzt werden, die das Verstopfen des Rohres (3, 10) und des seitlichen Anschlussstutzens (10') verhindern können.
